# EUROPÄISCHE PATENTANMELDUNG

(11) **EP 0 583 639 A1**
(43) Veröffentlichungstag der Anmeldung: **23.02.1994**
(21) Anmeldenummer: 93111655.2
(22) Anmeldetag: 21.07.1993
(51) Int. Cl.: B29C 45/17

(54) **Spritzgiessmaschine, insbesondere Kunstoffspritzgiessmaschine**

(30) Priorität: 31.07.1992 DE 9210274 U
(71) Anmelder: Battenfeld Kunststoffmaschinen Ges.m.b.H., A-2542 Kottingbrunn (AT)
(72) Erfinder: Heindl, Friedrich, A-2500 Baden (AT); Müssler, Richard, A-7035 Steinbrunn (AT); Bleier, Harald, A-2700 Wr. Neustadt (AT)
(74) Vertreter: Müller, Gerd, Dipl.-Ing.

(57) **Zusammenfassung**

Bei einer Spritzgießmaschine (1), insbesondere Kunststoffspritzgießmaschine, deren die Aufbauten, z. B. die Spritzvorrichtung (5) und die Schließeinheit (7) tragender Grundrahmen auf Ständern ruht, wird eine Abstützung ohne Einschränkung der Freiräume erreicht, wenn der Grundrahmen (3) auf in Maschinenlängsrichtung nicht miteinander verbundenen Ständern (2) angeordnet ist.

## Beschreibung

Die Erfindung betrifft eine Spritzgießmaschine, deren die Aufbauten, z. B. die Spritzvorrichtung und die Schließeinheit, tragender Grundrahmen auf Ständern ruht.

Eine Spritzgießmaschine dieser Art ist durch die DE-OS 23 05 587 bekanntgeworden. Der Grundrahmen stützt sich dort mit vier Ständern unter Zwischenlage von Gummiklötzen auf ein den Abmessungen des Grundrahmens weitestgehend entsprechendes, plattenartiges Fußteil ab, das an seinen Ecken vier den Rahmenständern zugewandte Konsolen aufweist. Auf diese Weise ergibt sich eine mehrseitig offene Abstützung des Grundrahmens, die das Hindurchführen eines Bandförderers in einer von wenigstens zwei Hauptrichtungen der Maschine erlaubt. Aufgrund des durchgehenden Fußteils ist es bei der bekannten Spritzgießmaschine nicht möglich, den Raum unter Flur, d.h., unter dem Fußteil zu benutzen. Da außerdem der Öltank, der eine gewisse Größe besitzen muß, unterhalb des Spritzaggregates angeordnet ist, ergeben sich im Bereich der Spritzdüse Probleme, z. B. wenn es darum geht, das zum Reinigen des Plastifizierzylinders benötigte Ausspritz- bzw. Reinigungsmaterial abzutransportieren.

Der Erfindung liegt die Aufgabe zugrunde, eine gattungsgemäße Spritzgießmaschine ohne die genannten Nachteile zu schaffen, insbesondere eine Abstützung ohne Einschränkung der Freiräume zu ermöglichen.

Diese Aufgabe wird erfindungsgemäß dadurch gelöst, daß die Ständer in Maschinenlängsrichtung mit Abstand voneinander angeordnet und ausschließlich durch den Grundrahmen miteinander verbunden sind. Es ist erkannt worden, daß es zur ausreichenden Abstützung des Grundrahmens bzw. der Spritzgießmaschine keines durchgehenden Fußteils bedarf. Somit ist auch der Hüttenflur frei zugänglich, was es erlaubt, Peripherieaggregate unter Flur anzuordnen, bspw. einen Aufnahmebehälter für das Ausspritz- bzw. Reinigungsmaterial der Spritzdüse.

Es empfiehlt sich, einen den Grundrahmen in Maschinenlängsrichtung jeweils am vorderen und am hinteren Stirnende abstützenden Querständer vorzusehen. Die gesamte Spritzgießmaschine bzw. ihr Grundrahmen ruht somit auf lediglich zwei Ständern.

Wenn vorteilhaft die beiden Querständer U-förmig ausgebildet und mit ihren freien Durchgängen einander zugewandt angeordnet sind, läßt sich ein durchgehender Freiraum sowohl in Maschinenlängsrichtung als auch in Querrichtung erreichen.

Bei vorteilhaft an den Längsseiten des Grundrahmens ausgebildeten Längsschächten lassen sich diese einerseits als Energieverteiler (z. B. für Hydraulik, Elektrik, Pneumatik) nutzen, andererseits erhöhen sie die Stabilität des selbsttragenden, aus einer Stahlblech-Schweißkonstruktion bestehenden Grundrahmens. Weiterhin lassen sich die Längsschächte als Auffangbehälter für eventuelle Hydraulikleckagen heranziehen.

Es wird vorgeschlagen, daß in einem Freiraum des Grundrahmens unterhalb der Spritzvorrichtung ein Antriebsaggregat angeordnet ist. Es läßt sich dann - da dort genügend Platz zur Verfügung steht - an dem von dem Antriebsaggregat entfernten Ende des Grundrahmens ein Öltank vorsehen. Die aufgrund der erfindungsgemäßen Abstützung erreichten Freiräume ermöglichen es somit, den meist großbauenden, sperrigen Öltank entfernt von dem Antriebsaggregat anzuordnen und damit in einen Bereich zu verlagern, in dem sich keine für den Betrieb der Spritzgießmaschine wesentlichen Funktionseinheiten befinden.

Der Raumgewinn bzw. der zusätzlich erreichte Platz erlauben es, einen unterhalb der Düse der Spritzvorrichtung verlaufenden, im Freiraum zwischen den Ständern mündenden Vertikalschacht vorzusehen. Dieser von oben nach unten durchgehende, in sich abgegrenzte Vertikalschacht kann zum gesonderten Abtransport von zum Reinigen des Plastifizierzylinders benötigten Ausspritz-bzw. Reinigungsmaterial zu einem Unterflur - da ja der Zugang nicht durch eine Fußleiste versperrt wird - aufgestellten Sammel- bzw. Aufnahmebehälter führen.

Es wird vorgeschlagen, daß die Oberfläche des Grundrahmens mit bearbeiteten Flächen für die Aufbauten versehen ist. Diese Flächen stellen somit die Schnittstelle zu bspw. der Schließeinheit und dem Spritzaggregat dar, die an diesen vorbereiteten Stellen auf den Grundrahmen aufgesetzt werden; darüberhinaus sind alle für den Betrieb einer hydraulischen bzw. elektrischen Spritzgießmaschine benötigten Aggregate innerhalb des selbsttragenden Grundrahmens angeordnet. Der unterhalb des Grundrahmens geschaffene Freiraum wird hiervon nicht beeinträchtigt und steht dem Anwender zur freien Verfügung.

Wenn die Ständer lösbar mit dem Grundrahmen verbunden sind, läßt sich die Höhe des Grundrahmens über Flur auf einfache Weise verändern bzw. variieren, z.B. durch Unterlegen von geeigneten Distanzstücken. Gleichwohl lassen sich die Ständer alternativ fest mit dem Grundrahmen verbinden, z. B. durch Verschweißen.

Es empfiehlt sich, daß auf den Grundrahmen Sicherheitsverkleidungen aufgesetzt sind. Diese sollten zumindest von den Seiten her die beweglichen Funktionsteile der Spritzgießmaschine einschließen bzw. abschotten, so daß das Bedienungspersonal nicht gefährdet wird. Die geschaffenen Freiräume werden hierdurch nicht beeinträchtigt, d.h. der zur Verfügung stehende Platz für z. B. unter dem Spritzaggregat angeordnete Peripheriegeräte bzw. in Maschinenlängsrichtung oder - querrichtung verlaufende Förderbänder wird von der Sicherheitsverkleidung nicht berührt.

Weitere Merkmale und Vorteile der Erfindung ergeben sich aus den Ansprüchen und der nachfolgenden Beschreibung, in der ein Ausführungsbeispiel des Gegenstandes der Erfindung näher erläutert wird. Es zeigen:
- Figur 1: in der Längsansicht eine Kunststoffspritzgießmaschine mit erfindungsgemäßen Ständern;
- Figur 2: die Spritzgießmaschine gemäß Figur 1 in der Draufsicht;
- Figur 3: die Spritzgießmaschine gemäß Figur 1 in der Seitenansicht und
- Figur 4: eine perspektivische Ansicht des sich auf den erfindungsgemäßen Ständern abstützenden Grundrahmens der Kunststoffspritzgießmaschine nach Figur 1.

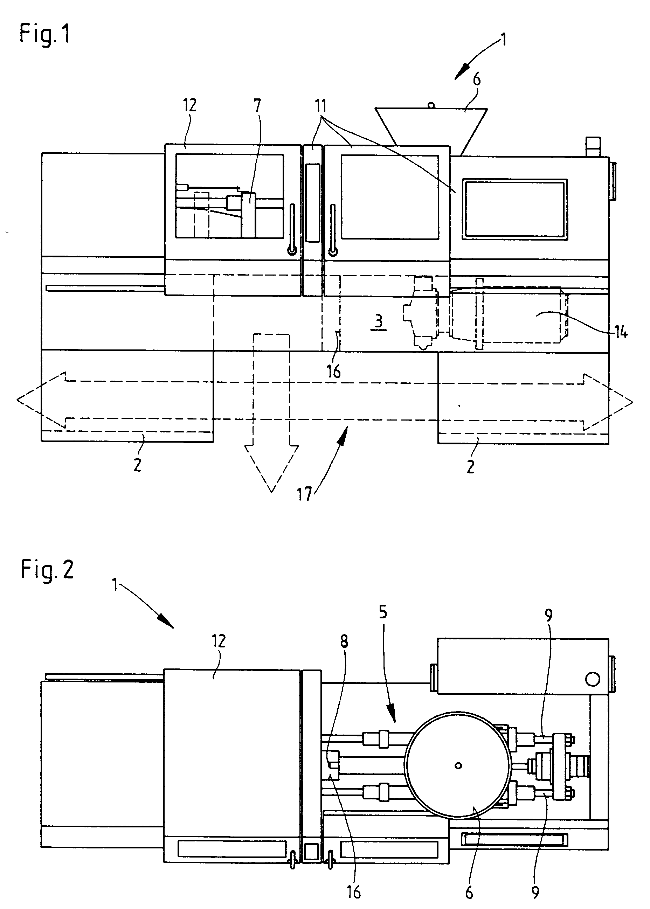

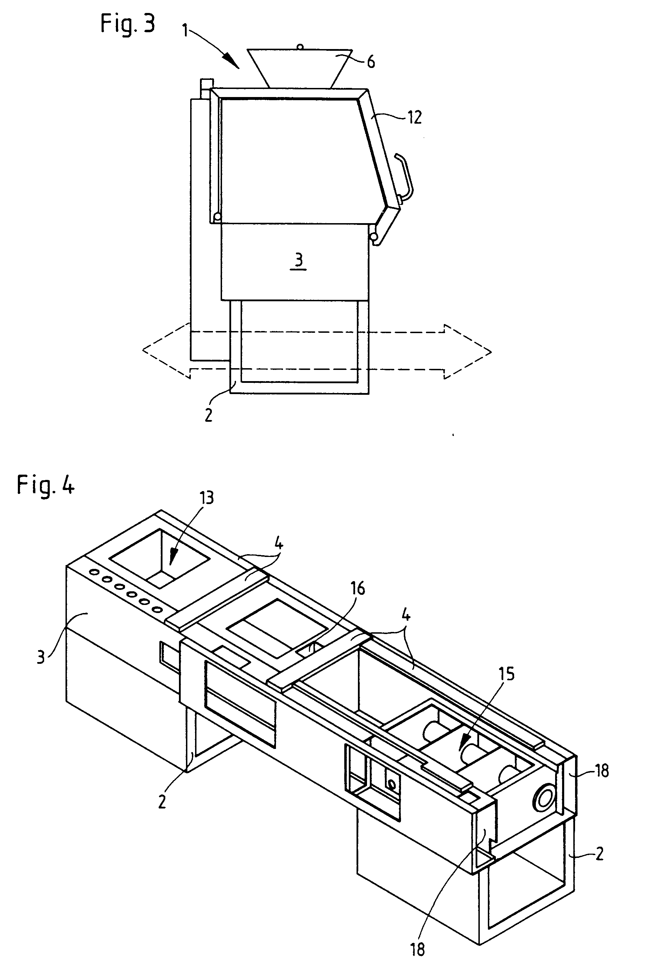

Eine Kunststoffspritzgießmaschine 1 besteht aus U-förmigen Ständern 2 (vgl. auch Figur 4) und einem darauf ruhenden, im einzelnen in Figur 4 dargestellten, selbsttragenden Grundrahmen 3, der zur Aufnahme der funktionswesentlichen Bauteile mit bearbeiteten Flächen 4 versehen ist, auf die das Spritzaggregat 5 nebst Einfülltrichter 6 für das zu spritzgießende Material und eine Schließeinheit 7 aufgesetzt sind. Das an seinem der Schließeinheit 7 zugewandten Ende eine Spritzdüse 8 aufweisende Spritzaggregat 5 ist auf FührungsStangen 9 angeordnet (vgl. Figur 2) und wird zylinderbetätigt in und außer Wirkverbindung mit der Schließeinheit 7 gebracht. Die Funktionseinheiten, d.h. insbesondere die Schließeinheit 7 und das Spritzaggregat 5 sind mittels Sicherheitsverkleidungen 11, 12 nach außen hin abgeschottet, wobei die der Schließeinheit 7 zugeordnete Sicherheitsverkleidung 12 als die gesamte Maschinenbreite übergreifende Schwenkhaube ausgebildet ist; die Sicherheitsverkleidungen 11 bzw. die Schwenkhaube 12 sind ebenfalls auf den Grundrahmen 3 aufgesetzt.

Während somit die Funktionseinheiten auf den Grundrahmen 3 aufgesetzt sind, befinden sich alle für den Betrieb der Kunststoffspritzgießmaschine 1 benötigten Aggregate innerhalb des selbsttragenden Grundrahmens 3. Dieser nimmt in einem Freiraum 13 unterhalb des Spritzaggregates 5 ein Antriebsaggregat in Form eines Motors 14 und an dem den Motor 14 gegenüberliegenden Ende einen Öltank 15 (vgl. Figur 4) auf. Der wesentlich kleiner als der Öltank 15 bauende Motor 14 erlaubt es aufgrund seiner Anordnung unterhalb des Spritzaggregats 5 in dem Grundrahmen 3 einen Vertikalschacht 16 vorzusehen, der sich durch den Grundrahmen 3 hindurch erstreckt und in dem Freiraum 17 (vgl. Figur 1) zwischen den beiden in Maschinenlängsrichtung mit Abstand voneinander an den Stirnenden des Grundrahmens 3 angeordneten U-förmigen Ständern 2 mündet. Die Spritzdüse 8 endet - wie in Figur 2 dargestellt wird - oberhalb des Vertikalschachtes 16, so daß sich zum Säubern benötigtes Ausspritz- bzw. Reinigungsmaterial auf einfache Weise sogleich über den Vertikalschacht 16 abtransportieren läßt (vgl. den in Figur 1 gestrichelt dargestellten senkrechten Pfeil), z. B. in einen unter Flur angeordneten, nicht dargestellten Aufnahme- bzw. Sammelbehälter.

Die den Grundrahmen 3 abstützenden U-förmigen Ständer 2 sind mit ihren freien Durchgängen einander zugewandt angeordnet (vgl. Figur 4), so daß sich eine mehrseitig, nämlich sowohl in Maschinenlängsrichtung (vgl. den in Figur 3 gestrichtelten Doppelpfeil) und auch in Querrichtung (vgl. den in Figur 1 gestrichelt dargestellten Doppelpfeil) offene Abstützung ergibt, die ausreichende Freiräume bereitstellt, um dort Peripheriegeräte und/oder Geräte zum Abtransport der Spritzgießteile unterbringen zu können, bspw. Bandförderer. Wenn die U-förmigen Ständer 2 lösbar mit dem Grundrahmen 3 verbunden sind, läßt sich der Freiraum unterhalb des Grundrahmens 3 je nach Bedarf beliebig variieren, nämlich durch einfaches Unterlegen von Distanzstücken.

Wie in Figur 4 gezeigt ist, erstrecken sich entlang beider Seiten des Grundrahmens 3 Längsschächte 18, die einerseits die Stabilität des Grundrahmens 3 erhöhen und andererseits zur Aufnahme von Energieverteilern bzw. von Versorgungsleitungen für bspw. die Hydraulik, Elekrik oder Pneumatik geeignet sind.

### Liste der Bezugszeichen

- 1: Spritzgießmaschine
- 2: Ständer
- 3: Grundrahmen
- 4: bearbeitete Fläche
- 5: Spritzvorrichtung
- 6: Einfülltrichter
- 7: Schließeinheit
- 8: Spritzdüse
- 9: Führungsstange
- 11: Sicherheitsverkleidung
- 12: Sicherheitsverkleidung
- 13: Freiraum
- 14: Motor
- 15: Öltank
- 16: Vertikalschacht
- 17: Freiraum
- 18: Längsschacht

## Patentansprüche

1. Spritzgießmaschine, insbesondere Kunststoffspritzgießmaschine, deren die Aufbauten, z. B. die Spritzvorrichtung und die Schließeinheit, tragender Grundrahmen auf Ständern ruht,
**dadurch gekennzeichnet,**
daß die Ständer (2) in Maschinenlängsrichtung mit Abstand voneinander angeordnet und ausschließlich durch den Grundrahmen (3) miteinander verbunden sind.

2. Spritzgießmaschine nach Anspruch 1,
**gekennzeichnet durch**
einen den Grundrahmen (3) in Maschinenlängsrichtung jeweils am vorderen und am hinteren Stirnende abstützenden Querständer (2).

3. Spritzgießmaschine nach Anspruch 2,
**dadurch gekennzeichnet,**
daß die beiden Querständer (2) U-förmig ausgebildet und mit ihren freien Durchgängen einander zugewandt angeordnet sind.

4. Spritzgießmaschine nach einem oder mehreren der
Ansprüche 1 bis 3,
**gekennzeichnet durch**
an den Längsseiten des Grundrahmens (3) ausgebildete Längsschächte (18).

5. Spritzgießmaschine nach einem oder mehreren der
Ansprüche 1 bis 4,
**dadurch gekennzeichnet,**
daß in einem Freiraum (13) des Grundrahmens (3) unterhalb der Spritzvorrichtung (5) ein Antriebsaggregat (14) angeordnet ist.

6. Spritzgießmaschine nach einem oder mehreren der
Ansprüche 1 bis 5,
**dadurch gekennzeichnet,**
daß an dem von dem Antriebsaggregat (14) entfernten Ende des Grundrahmens (3) ein Öltank (15) angeordnet ist.

7. Spritzgießmaschine nach einem oder mehreren der
Ansprüche 1 bis 6,
**gekennzeichnet durch**
einen unterhalb der Düse (8) der Spritzvorrichtung (5) verlaufenden, im Freiraum zwischen den Ständern (2) mündenden Vertikalschacht (16).

8. Spritzgießmaschine nach einem oder mehreren der
Ansprüche 1 bis 7,
**dadurch gekennzeichnet,**
daß die Oberfläche des Grundrahmens (3) mit bearbeiteten Flächen (4) für die Aufbauten (5, 7) versehen ist.

9. Spritzgießmaschine nach einem oder mehreren der
Ansprüche 1 bis 8,
**dadurch gekennzeichnet,**
daß die Ständer (2) lösbar mit dem Grundrahmen (3) verbunden sind.

10. Spritzgießmaschine nach einem oder mehreren der
Ansprüche 1 bis 9,
**dadurch gekennzeichnet,**
daß auf den Grundrahmen (3) Sicherheitsverkleidungen (11, 12) aufgesetzt sind.
